# FASCICULE DE BREVET EUROPEEN

(11) **EP 3 284 125 B1**
(45) Date de publication et mention de la délivrance du brevet: **03.06.2020**
(21) Numéro de dépôt: 16717182.6
(22) Date de dépôt: 13.04.2016
(51) Int. Cl.: H01M 2/10, B60R 16/04

(54) **DISPOSITIF DE FIXATION ET DE PROTECTION DE BATTERIE ET VEHICULE CORRESPONDANT**
VORRICHTUNG ZUR BEFESTIGUNG UND ZUM SCHUTZ EINER BATTERIE UND ENTSPRECHENDES FAHRZEUG
DEVICE FOR MOUNTING AND PROTECTING A BATTERY, AND CORRESPONDING VEHICLE

(30) Priorité: 15.04.2015 FR 1553324
(43) Date de publication de la demande: 21.02.2018
(73) Titulaire: Renault S.A.S., 92100 Boulogne-Billancourt (FR)
(72) Inventeur: GUIGNARD, Fabrice, 78280 Guyancourt (FR)
(86) Numéro de dépôt international: PCT/FR2016/050703
(87) Numéro de publication internationale: WO 2016/166435

(56) Documents cités:
- DE-A1-102013 216 555
- FR-A1- 3 011 136

## Description

### 1. Domaine de l'invention

L'invention concerne le domaine de l'agencement et de la structure de véhicule, notamment véhicule automobile comprenant un moteur à combustion interne, électrique ou hybride. Elle vise en particulier un dispositif de fixation et de protection de batterie pour un véhicule automobile. L'invention concerne également un véhicule automobile comportant un tel dispositif.

### 2. Art antérieur

Les véhicules automobiles sont équipés de manière générale d'une ou de plusieurs batteries de toute tailles, lesquelles sont montées dans un bac de support de batterie. Ces derniers comprennent un fond muni de puits destinés à recevoir des moyens de fixation tels que des vis pour la solidarisation du bac de support sur une structure de carrosserie de véhicule et quatre parois dont une paroi arrière se dressant du fond comme c'est le cas dans le document DE10201321655A1. Chaque batterie est fixée au bac de support au moyen d'une bride de fixation prenant appui sur la partie supérieure des talons de la batterie et d'une saillie prévue sur une paroi du bac de support de batterie prenant appui également sur un talon de la batterie. Certaines de ces batteries peuvent être du type plomb-acide.

Toutefois, lors d'un choc arrière du véhicule à 50km/h par exemple, la bride de fixation de la batterie peut ne pas être suffisante pour retenir les efforts appliqués sur la batterie et donc n'est pas suffisamment robuste et rigide pour retenir fermement la batterie dans le bac de support. La paroi arrière du bac de support n'est pas suffisamment robuste et rigide non plus pour retenir la batterie lors du recul de celle-ci et d'absorber l'énergie du recul due au choc. A cela s'ajoute le fait que des fuites d'acide peuvent survenir dans le cas des batteries plomb-acide et entrainer un risque de corrosion des vis de fixation du bac de support notamment pour les batteries de petite taille qui laissent apparaitre ces vis.

### 3. Objectifs de l'invention

L'invention a notamment pour objectif de pallier tout ou partie des inconvénients de l'art antérieur.

Un objectif de l'invention est de fournir un dispositif de fixation et de protection de batterie permettant de protéger l'intégrité de la batterie des efforts appliqués sur le véhicule et la batterie, notamment lors d'un choc arrière tout étant simple et peu coûteux.

### 4. Résumé de l'invention

Ces objectifs sont atteints grâce à un dispositif de fixation et de protection de batterie pour véhicule automobile, le dispositif comprenant un bac de support de batterie comprenant une paroi arrière définie selon un axe horizontal longitudinal suivant lequel est allongé un fond muni de puits destinés à recevoir des moyens de fixation du bac de support sur une structure de carrosserie du véhicule, le dispositif comprenant au moins un élément de retenue de batterie disposé dans le bac de support de batterie et configuré pour être agencé en contact avec l'une des faces de la batterie, l'élément de retenue comportant une première partie et au moins un bouchon de protection recouvrant au moins un puits du bac de support.

Cette solution permet de résoudre les problèmes précités. En particulier, ce dispositif de fixation et de protection permet d'une part, lorsque l'élément de retenue est installé dans le fond du bac de support de batterie, d'éviter que la batterie ne recule lors d'un choc. L'élément de retenue évite ainsi le déplacement de la batterie au moins dans la direction du choc par exemple. D'autre part, un tel dispositif permet d'éviter, lors d'écoulement d'acide corrosif de la batterie pouvant survenir lors d'une défaillance ou d'un choc, un risque de corrosion des vis de fixation du bac de support de batterie sur la structure de carrosserie du véhicule en protégeant les vis. Ainsi, il n'y a pas besoin de modifier la structure du bac de support, ni l'environnement de la structure de carrosserie du véhicule pour maintenir l'intégrité de la batterie lors d'un choc. Par ailleurs, l'élément de retenue de par sa conception est simple à fabriquer, adaptable facilement au bac de support et est peu couteux.

Selon d'autres caractéristiques dont les avantageuses ressortiront de la présente description :
- l'élément de retenue est amovible ;
- l'élément de retenue est agencé de manière à être en contact avec la paroi arrière du bac de support de la batterie et l'une des faces de la batterie ;
- l'élément de retenue est agencé de manière à être en contact avec la paroi arrière du bac de support de la batterie et une face verticale de la batterie ;
- l'élément de retenue est agencé de manière à être en contact avec la paroi arrière du bac de support de la batterie et une face inférieure de la batterie ;
- plus précisément, la première partie de l'élément de retenue est en contact avec la paroi arrière du bac de support de batterie et la face verticale ou inférieure de la batterie ;
- le bouchon et la première partie sont formées d'une seule pièce ;
- le bouchon et la première partie présentent chacun une surface supérieure définissant des plans parallèles entre eux ;
- l'élément de retenue comprend une deuxième partie mobile par rapport à la première partie entre :
   - une première position déployée dans laquelle la première et la deuxième parties sont disposées de manière adjacente suivant une direction longitudinale de la première partie ; et,
   - une seconde position repliée dans laquelle la première et la deuxième parties sont disposées l'une au-dessus de l'autre.
- la deuxième partie est mobile par rapport à la première partie suivant une liaison pivot d'axe parallèle à la direction longitudinale de la première partie;
- la deuxième partie présente une surface supérieure pourvue de moyens de fixation configurés de manière à coopérer avec des moyens de fixation complémentaires de la surface supérieure de la première partie lorsque les premières et deuxième parties sont dans la position repliée ;
- la première et la deuxième parties présentent une surface latérale pourvue de moyens de fixation complémentaires configurés de manière à coopérer entre eux lorsque la première et la deuxième parties sont dans la position déployée ;
- la surface supérieure de la première partie comporte une zone d'interface munie d'éléments de fixation ;
- au moins les surfaces supérieures de la première partie et du bouchon de protection comportent des moyens anti-recul de la batterie ;
- le bouchon de protection comporte une surface intérieure opposée à la surface supérieure depuis laquelle s'étendent des jupes extérieure et intérieure, les jupes extérieures et intérieure comportant respectivement une paroi interne et une paroi externe délimitant une gorge ;
- le bouchon de protection présente une section circulaire.

L'invention concerne également un véhicule qui est équipé d'au moins un dispositif de fixation et de protection de batterie comportant au moins l'une quelconque des caractéristiques susmentionnées.

### 5. Liste des figures

D'autres caractéristiques et avantages innovants ressortiront de la description ci-après, fournie à titre indicatif et nullement limitatif, en référence aux dessins annexés, dans lesquels :
- La figure 1 est une vue en perspective schématique illustrant une batterie montée dans un bac de support de batterie;
- La figure 2 est une vue en perspective schématique montrant le bac de support de batterie sans la batterie;
- La figure 3 illustre en perspective un exemple de l'élément de retenue selon l'invention installé dans un bac de support de batterie entre une batterie et la paroi arrière du bac de support ;
- La figure 4 illustre en perspective un exemple d'un élément de retenue monté dans un bac de support de batterie selon l'invention ;
- La figure 5 est une vue en perspective d'un exemple d'un élément de retenue selon l'invention dans une position déployée;
- La figure 6 est une vue en perspective d'un exemple d'un élément de retenue selon l'invention dans une position repliée ;
- La figure 7 illustre suivant une vue en perspective et de dessous un exemple d'élément de retenue selon l'invention ;
- La figure 8 est une vue en coupe partielle suivant un plan de coupe PP selon la figure 4 de l'élément de retenue agencé dans le bac de support de batterie;
- La figure 9 représente suivant une vue partielle un mode de réalisation de l'élément de retenue suivant l'invention ;
- La figure 10 et 11 sont des vues en perspective d'autres modes de réalisation d'un élément de retenue comprenant des éléments de fixation complémentaires selon l'invention ; et,
- La figure 12 illustre une vue de dessus d'un autre mode de réalisation de l'invention.

### 6. Description détaillée

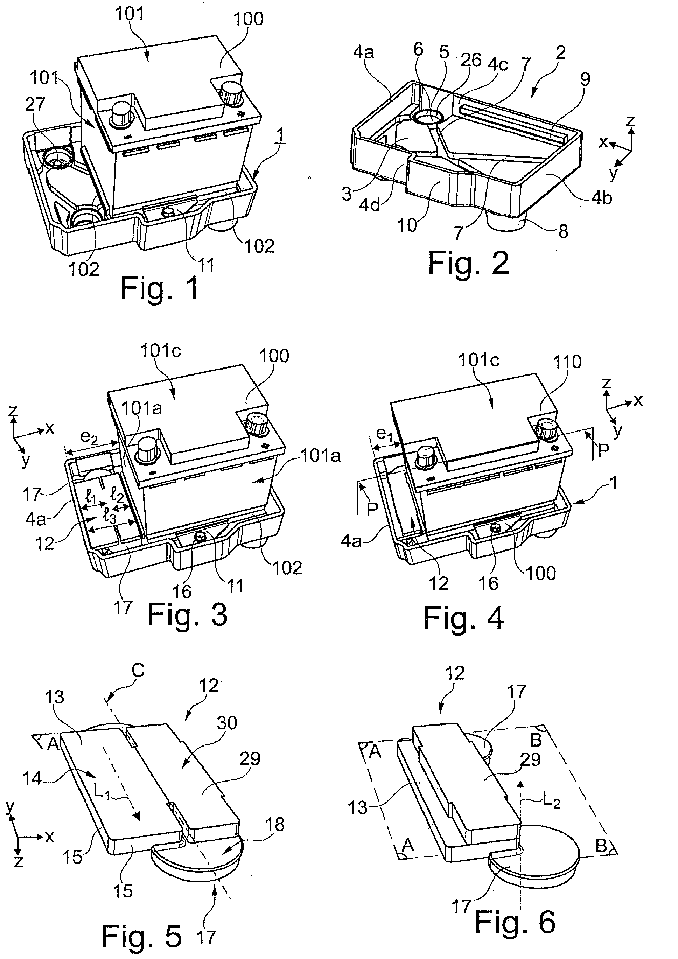

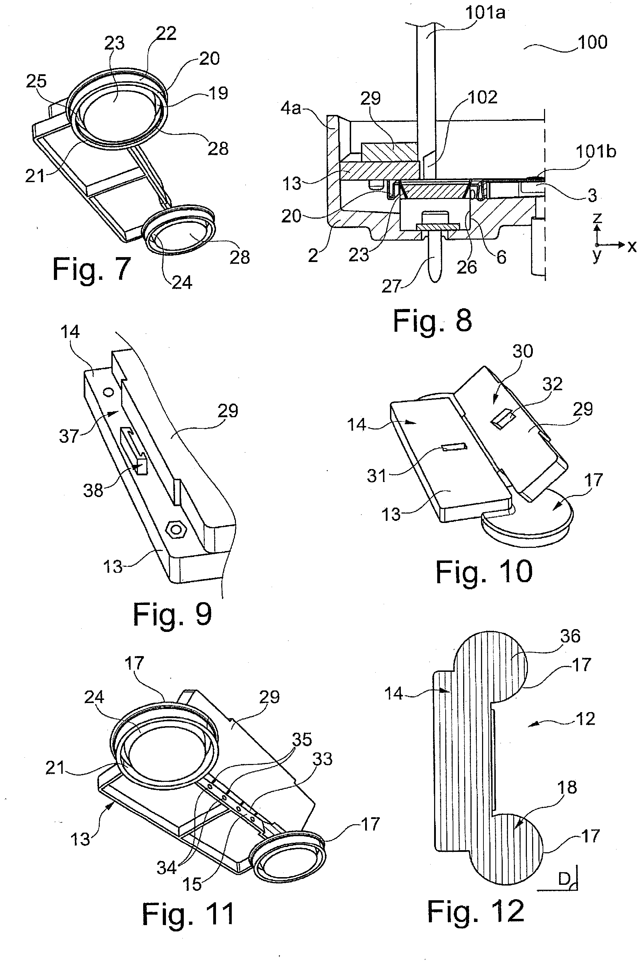

En référence à la figure 1, est représentée en perspective et de manière schématique une batterie 100 de petite taille (D1) montée dans un dispositif 1 de fixation et de protection de la batterie comprenant un bac de support 2 de batterie. La batterie 100 comprend de manière connue six faces 101 dont quatre faces 101a ici verticales portant ici chacune un talon 102 vers leur extrémité inférieure, une face inférieure 101b (figure 8) destinée à être en contact avec le fond du bac de support (2) et une face supérieure 101c opposée à la face inférieure 101b.

Sur la figure 2, de manière plus précise, le bac de support 2 de batterie comprend un fond 3 depuis lequel s'élèvent quatre parois dont une paroi arrière 4a, une paroi avant 4b opposée à la paroi arrière 4a et deux parois latérales 4c, 4d opposée l'une à l'autre. Pour faciliter la compréhension de l'invention, nous considérons que le fond 3 du bac de support est allongé suivant un axe longitudinal horizontal X. Est également représenté l'axe transversal Y suivant lequel s'étend le fond 3 en profondeur et qui est perpendiculaire à l'axe longitudinal horizontal X et un axe vertical Z suivant lequel s'étend les parois 4 depuis le fond 3 et qui est perpendiculaire à l'axe longitudinal horizontal X ainsi qu'à l'axe transversal Y de sorte que ces trois axes X, Y, Z forment un repère orthogonal direct tel qu'illustré sur la figure 2. Les termes « avant », « arrière », sont définis par rapport à l'axe horizontal X, les termes « inférieur », « supérieur » sont définis par rapport à l'axe Z et le terme « latéral » est défini par rapport à l'axe Y.

Le bac de support 2 est rapporté et solidarisé à une structure de carrosserie (non représentée) de véhicule grâce à des moyens de fixation tels que des vis 27 (figure 1) dans des puits 5 prévus dans le fond 3 du bac de support 2. Les puits 5 sont formés ici d'une paroi 6 cylindrique se dressant depuis le fond 3 du bac de support 2. Le fond 3 du bac de support 2 comprend également des canaux d'évacuation 7 de liquide formés dans le fond 3. Ces canaux d'évacuation 7 permettent l'évacuation de l'acide pouvant s'écouler de la batterie 100. Les canaux 7 sont reliés à un orifice 8 d'évacuation situé dans le fond 3 du bac de support 2 et sont destinés à entraîner l'acide vers l'extérieur du véhicule. La paroi latérale 4c est pourvue d'une saillie 9 s'étendant sur toute sa longueur tandis que la paroi latérale 4d opposée présente un décrochement 10 permettant l'agencement et la fixation d'une bride de fixation 11 (figures 1, 3 et 4).

Sur la figure 3 est illustrée la batterie 100 supportée par le fond 3 dans le bac de support 2 de batterie et immobilisée par la saillie 9 prenant appui sur le talon (non représenté) de la face de la batterie 100 orientée vers la saillie 9. La bride de fixation 11 présente une portion qui prend appui sur la partie supérieure du talon 102 de la face 101 de la batterie qui est orientée vers la paroi 4d du bac de support de batterie 2 et la fixation est ajustée au moyen d'une vis 16 ou tout autre élément fileté fixant la bride de fixation 11 et la batterie 100.

Le dispositif 1 de fixation et de protection de la batterie comprend également un élément de retenue 12 tel qu'illustré sur les figures 3 et 4. L'élément de retenue 12 est également disposé sur le fond 3 du bac de support 2 et en particulier, est configuré pour être agencé en contact avec l'une des faces 101 de la batterie. Nous entendons par « élément de retenue » un élément permettant d'éviter le déplacement de la batterie dans le bac de support de batterie et de maintenir l'intégrité de celle-ci ainsi que du bac de support de batterie. L'élément de retenue 12 est amovible par rapport au bac de support 2. De la sorte, l'élément de retenue 12 peut être remplacé en cas de défaillance ou détérioration. Sur la figure 3, l'élément de retenue 12 est agencé entre la paroi arrière 4a du bac de support 2 et une des faces 101 de la batterie 101. Plus précisément, l'élément de retenue est agencé entre la paroi arrière 4a et la face 101 de la batterie 100 qui est orientée vers la paroi arrière 4a du bac de support 2. De manière avantageuse, mais non limitative, l'élément de retenue est agencé de manière à être en contact avec la paroi arrière 4a et une face verticale 101a de la batterie.

Sur les figures 5 et 6, l'élément de retenue 12 comprend une première partie 13 s'étendant suivant une direction longitudinale L1 (perpendiculaire à l'axe X tel que représenté sur la figure 5). La première partie 13 présente une surface supérieure 14 définissant un plan A et quatre côtés 15 s'étendant depuis cette surface supérieure 14. La première partie 13 présente ici une section rectangulaire. De manière avantageuse mais non limitative, la première partie 13 a une forme globalement parallélépipédique et en particulier, parallélépipédique rectangulaire. De la sorte, l'élément de retenue 12 peut être facilement monté dans le bac de support 2 entre la batterie 100 et la paroi arrière 4a du bac de du support 2. En particulier, la première partie 13 est en contact avec la paroi arrière 4a et une face 101 de la batterie.

L'élément de retenue 12 présente un bouchon de protection 17 ou couvercle agencé à au moins une extrémité libre d'un des côtés 15 de la première partie 12. Ici, deux bouchons de protection 17 sont agencés chacun vers un coin de deux côtés 15 adjacents de la première partie 13. En particulier, les bouchons sont situés vers un même côté 15, ici latéral (suivant la direction L1), de la première partie 13. Le bouchon de protection 17 et la première partie 13 sont formés d'une seule pièce. En d'autres termes, ceux-ci sont formés d'un seul tenant de sorte à fabriquer et à monter l'élément de retenue 12 facilement et rapidement. Le bouchon de protection 17 présente une surface supérieure 18 et une surface intérieure 19 opposée à la surface supérieure 17. La surface supérieure 18 définit un plan B parallèle au plan de la surface supérieure 14 de la première partie 13. En d'autres termes, les plans A et B des surfaces supérieures 14, 18 sont décalés suivant l'axe Z tel que représenté sur la figure 5.

En référence aux figures 7 et 8, le bouchon de protection 17 comporte une jupe extérieure 20 qui s'étend depuis la surface intérieure 19 et comportant une paroi interne 21 opposée à une paroi externe 22. Une jupe intérieure 23 s'étend également depuis la surface intérieure 19 du bouchon de protection 17 et comporte une paroi externe 24. La paroi interne 21 de la jupe extérieure 20 et la paroi externe 24 de la jupe intérieure 23 délimite une gorge 25. Le bouchon de protection 17 ainsi que les parois des jupes extérieure 20 et intérieure 23 présentent ici une section circulaire. La jupe intérieure 23 présente une forme conique pour favoriser l'emmanchement du bouchon de protection 17 dans un puit 5. La gorge 25 est destinée à recevoir la paroi 6 cylindrique du puit 5 correspondant lorsque l'élément de retenue 12 est agencé dans le bac de support 2 de batterie. De la sorte, la jupe intérieure 23 du bouchon de protection 17 s'étend à l'intérieur de la paroi cylindrique 6 du puit 5. En particulier, la paroi externe 24 de la jupe intérieure 23 est en contact et est insérée de manière ajustée, voire de force avec une face interne 26 de la paroi 6 cylindrique du puit 5. En d'autres termes, la paroi externe 24 de la jupe intérieure 23 présente ici un diamètre sensiblement égal à celui de la face interne 26 de la paroi 6 cylindrique du puit 5. La paroi interne 21 de la jupe extérieure 20 comprend également un bourrelet 28 venant en appui sur la paroi 6 cylindrique du puit 5 et permettant le coincement du bouchon de protection 17 dans le puit. Ainsi, chaque bouchon de protection 17 recouvre le puit 5 et en particulier la vis de fixation 27 qui y est logée avec un effet « parapluie » de sorte à protéger la vis 27 de l'acide et donc de la corrosion (cf. figure 8). L'acide peut s'écouler alors dans les canaux d'évacuation 7 vers l'orifice d'évacuation. Le bourrelet 28 assure également une protection déflecteur contre d'éventuelles projections d'acide. La jupe intérieure 23 est fermée ici par une paroi 28 pour apporter de la robustesse.

Le talon 102 de la batterie 100 vient en contact d'un côté 15 latéral de la première partie 13 de l'élément de retenue lors d'un choc. Par ailleurs, les parois 24, 21 des jupes extérieures 20 et intérieure 23 permettent d'assurer un report des efforts dus au recul de la batterie 100 et d'absorber l'énergie lors du choc.

L'élément de retenue 12 comprends également une deuxième partie 29 mobile par rapport à la première partie 13 entre :
- une première position déployée dans laquelle la première 13 et la deuxième 29 parties sont disposées de manière adjacente suivant la direction longitudinale L1 (figures 3 et 5); et,
- une seconde position repliée dans laquelle la première 13 et la deuxième 29 parties sont disposées l'une au-dessus de l'autre (suivant une direction longitudinale verticale L2 en référence aux figures 4 et 6 et qui est orthogonal à la direction L1). En d'autres termes leurs surfaces supérieures 14, 30 sont superposées.

Une telle configuration permet que l'élément de retenue 12 soit adaptable à tout type de batterie. Lorsque l'élément de retenue 12 est monté dans le bac de support 2, la direction longitudinale L1 est parallèle à l'axe transversal Y et est orthogonal à l'axe longitudinal horizontal X. Ainsi, lorsque la deuxième partie 29 est déployée, l'élément de retenue permet de retenir et de maintenir la batterie 100 de petite taille (D1) dans le bac de support 2 de batterie lors d'un choc arrière. En d'autres termes, l'élément de retenue empêche/évite le déplacement de la batterie suivant un des axes X, Y, Z, ici l'axe longitudinal horizontal X lors d'un choc arrière. A l'inverse, lorsque la deuxième partie 30 est repliée, celle-ci permet de retenir et de maintenir une batterie 110 de taille moyenne (D2) dans le bac de support 2 lors d'un choc arrière.

Pour cela, la première partie 13 présente une largeur l1 (figure 3) sensiblement égale à l'espace e1 (figure 4) formé entre la paroi arrière 4a (surface interne) et la face 101 de la batterie 110 lorsque cette dernière est immobilisée dans le bac de support 2. Par ailleurs, la deuxième partie 29 comprend une largeur l2 qui est ici inférieure à celle de la première partie 13. Lorsque la deuxième partie 29 est déployée l'élément de retenue 12 présente une largeur l3 égale à celles de la première partie 13 et de la deuxième partie 29, ainsi qu'à l'espace e2 formé entre la paroi arrière 4a (surface interne) et la face 101 de la batterie 100 lorsque cette dernière est immobilisée dans le bac de support 2.

En particulier, la deuxième partie 29 est mobile par rapport à la première partie 13 suivant au moins une liaison pivot d'axe C parallèle à la direction longitudinale L1. Dans un souci de simplicité et de coût de fabrication, la liaison pivot est réalisée par un amincissement de matière entre la première 13 et la deuxième 29 parties.

L'élément de retenue 12 est réalisé dans un matériau en polymère ou en copolymère. En particulier, le matériau polymère est choisi parmi le groupe des matériaux polymères thermoplastiques, par exemple un polypropylène (PP) .

Suivant un mode de réalisation de l'élément de retenue 13 illustré sur la figure 9, la surface supérieure 14 de la première partie 13 comporte une zone d'interface 37 munie d'éléments de fixation 38. Ces éléments de fixation 38 peuvent être des trous pour la fixation de pion sapin, une queue d'aronde et/ou un insert métallique pour la fixation d'éléments par vissage. Ainsi, cette zone d'interface 37 avec les éléments de fixation 38 permettent la création de points de fixation supplémentaires pour d'autres pièces rapportées à fixer dans le véhicule.

Dans un mode de réalisation de l'élément de retenue 12 illustré sur la figure 10, la surface supérieure 30 de la deuxième partie 29 est pourvue de moyens de fixation configurés de manière à coopérer avec des moyens de fixation complémentaires de la surface supérieure 14 de la première partie 13 lorsque les premières 13 et deuxième 29 parties sont dans la position repliée. Cette configuration 29 permet de maintenir fermement la deuxième partie 29 dans la position repliée. En particulier, la surface supérieure 14 de la première partie 13 présente une lumière 31. La surface supérieure 30 de la deuxième partie 29 présente une patte 32 destinée à se clipper dans la lumière 31 pour retenir la deuxième partie 29 lorsque celle-ci est dans la position repliée.

Suivant un autre moyen de réalisation illustré sur la figure 11, un côté 15 latéral de la première partie 13 et un côté 33 latéral de la deuxième parties 29 sont pourvus de moyens de fixation complémentaires configurés de manière à coopérer entre eux lorsque la deuxième 29 parties est dans la position déployée. Cette configuration permet de maintenir fermement la deuxième partie 29 dans la position déployée. De manière plus précise, le côté 15 latéral de la première partie 13 opposée au côté 15 agencée contre la paroi arrière 4a présente une pluralité d'ouvertures 34. Le côté 33 latéral de la deuxième partie 29 disposée en regard du côté 15 latéral présentant les ouvertures 34 comprend une pluralité de pions 35 destinée à se clipper chacun dans une ouverture de la pluralité d'ouvertures 34 lorsque la deuxième partie 29 est dans la position déployée.

Suivant encore un autre moyen de réalisation illustré sur la figure 12, au moins la surface supérieure 14 de la première partie 13 et du bouchon de protection 17 comportent des moyens anti-reculs de la batterie. Ces moyens anti-reculs sont ici formés par des stries 36. Dans ce mode de réalisation, l'élément de retenue 12 est agencé de manière à être en contact avec la paroi arrière 4a du bac de support de la batterie et une face inférieure de la batterie. De la sorte, lorsqu'une batterie de plus grande taille (non représentée) (taille supérieure à la batterie 110 de taille moyenne D2) est immobilisée dans le bac de support 2, une partie de cette batterie recouvre les surfaces supérieures 18 du bouchon de protection 17 et de la première partie 13. Les stries 36 peuvent être réalisées dans un matériau polymère tel que du caoutchouc. Dans ce mode de réalisation, les surfaces supérieures des premières parties et du bouchon de protection 17 sont définis dans le même plan D. De la sorte les stries 36 empêchent le glissement/déplacement de la batterie lors du recul de celle-ci. L'élément de retenue 12 peut être avantageusement mais non limitativement réalisé intégralement en caoutchouc.

L'invention est décrite dans ce qui précède à titre d'exemple.

## Revendications

1. Dispositif (1) de fixation et de protection de batterie (100 ; 110) pour véhicule automobile, le dispositif (1) comprenant un bac de support (2) de batterie comprenant une paroi arrière (4a) définie selon un axe horizontal longitudinal (X) suivant lequel est allongé un fond (3) muni de puits (5) destinés à recevoir des moyens de fixation du bac de support sur une structure de carrosserie du véhicule,
le dispositif (1) étant **caractérisé en ce qu'**il comprend au moins un élément de retenue (12) de batterie, disposé dans le bac de support (2) de batterie et configuré pour être agencé en contact avec l'une des faces (101) de la batterie, l'élément de retenue (12) comportant une première partie et au moins un bouchon de protection (17) recouvrant au moins un puits (5) du bac de support (2).

2. Dispositif (1) selon la revendication 1, **caractérisé en ce que** l'élément de retenue est agencé de manière à être en contact avec la paroi arrière (4a) du bac de support (2) de la batterie et une face verticale (101a) de la batterie.

3. Dispositif (1) selon la revendication 1, **caractérisé en ce que** l'élément de retenue (12) est agencé de manière à être en contact avec la paroi arrière (4a) du bac de support (2) de la batterie et une face inférieure (101c) de la batterie.

4. Dispositif (1) selon la revendication 1, **caractérisé en ce que** le bouchon de protection (17) et la première partie (13) de l'élément de retenue (12) sont formées d'une seule pièce.

5. Dispositif (1) selon la revendication 1 ou 4, **caractérisé en ce que** le bouchon de protection (17) et la première partie (13) présentent chacun une surface supérieure (14, 18) définissant des plans (A, B) parallèles entre eux.

6. Dispositif selon la revendication 1 ou 5, **caractérisé en ce que** l'élément de retenue (12) comprend une deuxième partie (29) mobile par rapport à la première partie (13) entre :
- une première position déployée dans laquelle la première et la deuxième parties sont disposées de manière adjacente suivant une direction longitudinale (L1) ; et,
- une seconde position repliée dans laquelle la première et la deuxième parties sont disposées l'une au-dessus de l'autre.

7. Dispositif selon la revendication 6, **caractérisé en ce que** la deuxième partie (29) présente une surface supérieure (30) pourvue de moyens de fixation configurés de manière à coopérer avec des moyens de fixation complémentaires de la surface supérieure (14) de la première partie (13) lorsque les premières et deuxième parties sont dans la position repliée.

8. Dispositif selon l'une des revendications 6 et 7, **caractérisé en ce que** la première (13) et la deuxième (29) parties présente un côté (15) latéral pourvu de moyens de fixation complémentaires configurés de manière à coopérer entre eux lorsque la première (13) et la deuxième (29) parties sont dans la position déployée.

9. Dispositif selon l'une quelconque des revendications précédentes, **caractérisé en ce que** la surface supérieure (14) de la première partie (13) comporte une zone d'interface (37) munie d'éléments de fixation (38).

10. Dispositif (1) selon l'une quelconques des revendications 4 à 9, **caractérisé en ce qu'**au moins les surfaces supérieures (14, 18) de la première partie (13) et du bouchon de protection (17) comportent des moyens anti-reculs de la batterie (100 ; 110).

11. Dispositif (1) selon la revendication 5, **caractérisé en ce que** le bouchon de protection (17) comporte une surface intérieure (19) opposée à la surface supérieure (18) depuis laquelle s'étendent des jupes extérieure (20) et intérieure (23), les jupes extérieures (20) et intérieure (23) comportant respectivement une paroi interne (21) et une paroi externe (24) délimitant une gorge (25).

12. Véhicule **caractérisé en ce qu'**il est équipé d'au moins un dispositif (1) de fixation et de protection de batterie selon l'une quelconque des revendications précédentes.

## Patentansprüche

1. Vorrichtung (1) zur Befestigung und zum Schutz einer Batterie (100; 110) für ein Kraftfahrzeug, wobei die Vorrichtung (1) eine Batterieaufnahmeschale (2) umfasst, die eine Rückwand (4a) umfasst, die entlang einer horizontalen Längsachse (X) ausgebildet ist, entlang der ein Boden (3) langgestreckt ist, der mit Löchern (5) zum Aufnehmen von Befestigungsmitteln zum Befestigen der Aufnahmeschale an einem Karosserierohbau des Fahrzeugs versehen ist,
wobei die Vorrichtung (1) **dadurch gekennzeichnet ist, dass** sie mindestens ein Batteriehalteelement (12) umfasst, das in der Batterieaufnahmeschale (2) gelegen ist und dazu ausgestaltet ist, in Kontakt mit einer der Seiten (101) der Batterie angeordnet zu werden, wobei das Halteelement (12) einen ersten Teil und mindestens einen Schutzverschluss (17), der mindestens ein Loch (5) der Tragwanne (2) bedeckt, beinhaltet.

2. Vorrichtung (1) nach Anspruch 1, **dadurch gekennzeichnet, dass** das Halteelement so angeordnet ist, dass es in Kontakt mit der Rückwand (4a) der Aufnahmeschale (2) der Batterie und einer vertikalen Seite (101a) der Batterie ist.

3. Vorrichtung (1) nach Anspruch 1, **dadurch gekennzeichnet, dass** das Halteelement (12) so angeordnet ist, dass es in Kontakt mit der Rückwand (4a) der Aufnahmeschale (2) der Batterie und einer Unterseite (101c) der Batterie ist.

4. Vorrichtung (1) nach Anspruch 1, **dadurch gekennzeichnet, dass** der Schutzverschluss (17) und der erste Teil (13) des Halteelements (12) aus einem einzigen Stück gebildet sind.

5. Vorrichtung (1) nach Anspruch 1 oder 4, **dadurch gekennzeichnet, dass** der Schutzverschluss (17) und der erste Teil (13) jeweils eine obere Fläche (14, 18) aufweisen, die zueinander parallele Ebenen (A, B) definieren.

6. Vorrichtung nach Anspruch 1 oder 5, **dadurch gekennzeichnet, dass** das Halteelement (12) einen zweiten Teil (29) umfasst, der in Bezug auf den ersten Teil (13) beweglich ist zwischen:
- einer ersten aufgeklappten Stellung, in welcher der erste und der zweite Teil entlang einer Längsrichtung (L1) nebeneinander gelegen sind; und
- einer zweiten zusammengeklappten Stellung, in welcher der erste und der zweite Teil übereinander angeordnet sind.

7. Vorrichtung nach Anspruch 6, **dadurch gekennzeichnet, dass** der zweite Teil (29) eine obere Fläche (30) aufweist, die mit Befestigungsmitteln versehen ist, die so ausgestaltet sind, dass sie mit komplementären Befestigungsmitteln der oberen Fläche (14) des ersten Teils (13) zusammenwirken, wenn der erste und der zweite Teil in der zusammengeklappten Stellung sind.

8. Vorrichtung nach einem der Ansprüche 6 und 7, **dadurch gekennzeichnet, dass** der erste (13) und der zweite (29) Teil eine seitliche Seite (15) aufweisen, die mit komplementären Befestigungsmitteln versehen ist, die so ausgestaltet sind, dass sie untereinander zusammenwirken, wenn der erste (13) und der zweite (29) Teil in der aufgeklappten Stellung sind.

9. Vorrichtung nach einem der vorhergehenden Ansprüche, **dadurch gekennzeichnet, dass** die obere Fläche (14) des ersten Teils (13) einen Schnittstellenbereich (37) beinhaltet, der mit Befestigungsmitteln (38) versehen ist.

10. Vorrichtung (1) nach einem der Ansprüche 4 bis 9, **dadurch gekennzeichnet, dass** mindestens die oberen Flächen (14, 18) des ersten Teils (13) und des Schutzverschlusses (17) Rückrutschsicherungsmittel für die Batterie (100; 110) beinhalten.

11. Vorrichtung (1) nach Anspruch 5, **dadurch gekennzeichnet, dass** der Schutzverschluss (17) eine zur oberen Fläche (18) entgegengesetzte innere Fläche (19) beinhaltet, von der aus sich äußere (20) und innere (23) Schürzen erstrecken, wobei die äußeren (20) und inneren (23) Schürzen jeweils eine Innenwand (21) und eine Außenwand (24) beinhalten, die eine Rille (25) begrenzen.

12. Fahrzeug, **dadurch gekennzeichnet, dass** es mit mindestens einer Vorrichtung (1) zur Befestigung und zum Schutz einer Batterie nach einem der vorhergehenden Ansprüche ausgestattet ist.

## Claims

1. Device (1) for mounting and protecting a battery (100; 110) for a motor vehicle, the device (1) comprising a battery support trough (2) comprising a rear wall (4a) defined along a longitudinal horizontal axis (X) along which there lies a bottom (3) provided with wells (5) that are intended to receive means for mounting the support trough on a body structure of the vehicle,
the device (1) being **characterized in that** it comprises at least one battery retention element (12) that is positioned in the battery support trough (2) and is configured so as to be arranged in contact with one of the faces (101) of the battery, the retention element (12) comprising a first part and at least one protective lid (17) covering at least one well (5) of the support trough (2).

2. Device (1) according to Claim 1, **characterized in that** the retention element is arranged so as to be in contact with the rear wall (4a) of the battery support trough (2) and a vertical face (101a) of the battery.

3. Device (1) according to Claim 1, **characterized in that** the retention element (12) is arranged so as to be in contact with the rear wall (4a) of the battery support trough (2) and a lower face (101c) of the battery.

4. Device (1) according to Claim 1, **characterized in that** the protective lid (17) and the first part (13) of the retention element (12) are formed in one piece.

5. Device (1) according to Claim 1 or 4, **characterized in that** the protective lid (17) and the first part (13) each have an upper surface (14, 18) defining mutually parallel planes (A, B).

6. Device according to Claim 1 or 5, **characterized in that** the retention element (12) comprises a second part (29) that is able to move, relative to the first part (13), between:
- a first, deployed position in which the first and second parts are positioned so as to be adjacent in a longitudinal direction (L1); and
- a second, folded-back position in which the first and second parts are positioned one above the other.

7. Device according to Claim 6, **characterized in that** the second part (29) has an upper surface (30) that is provided with mounting means which are configured so as to cooperate with complementary mounting means of the upper surface (14) of the first part (13) when the first and second parts are in the folded-back position.

8. Device according to either of Claims 6 and 7, **characterized in that** the first part (13) and the second part (29) have a lateral side (15) provided with complementary mounting means which are configured so as to cooperate with one another when the first part (13) and the second part (29) are in the deployed position.

9. Device according to any one of the preceding claims, **characterized in that** the upper surface (14) of the first part (13) comprises an interface zone (37) provided with mounting elements (38).

10. Device (1) according to any one of Claims 4 to 9, **characterized in that** at least the upper surfaces (14, 18) of the first part (13) and of the protective lid (17) comprise means preventing recoil of the battery (100; 110).

11. Device (1) according to Claim 5, **characterized in that** the protective lid (17) comprises an inner surface (19) which is opposite the upper surface (18) and from which there extend an outer skirt (20) and an inner skirt (23), the outer skirt (20) and inner skirt (23) respectively comprising an inner wall (21) and an outer wall (24) that delimit a channel (25).

12. Vehicle, **characterized in that** it is equipped with at least one device (1) for mounting and protecting a battery according to any one of the preceding claims.
